# EUROPEAN PATENT APPLICATION

(11) **EP 4 844 393 A1**
(43) Date of publication of application: **25.11.2026**
(21) Application number: 24918426.8
(22) Date of filing: 25.12.2024
(51) Int. Cl.: G01N 27/416, G01N 27/26, G01N 27/333

(54) **ELECTROLYTE CONCENTRATION ANALYSIS DEVICE AND ELECTROLYTE CONCENTRATION ANALYSIS METHOD**

(30) Priority: 15.01.2024 JP 2024004013
(71) Applicant: Hitachi High-Tech Corporation, Minato-ku Tokyo 105-6409 (JP)
(72) Inventor: FUKUYAMA Michiko, Tokyo 105-6409 (JP); YAMAMOTO Haruyoshi, Tokyo 100-8280 (JP); FUKUYAMA Yuto, Tokyo 105-6409 (JP); MIYAKE Masafumi, Tokyo 105-6409 (JP)
(74) Representative: MERH-IP Matias Erny Reichl Hoffmann Patentanwälte PartG mbB
(86) International application number: PCT/JP2024/045911
(87) International publication number: WO 2025/154515

(57) **Abstract**

An electrolyte concentration analyzer detects that an inappropriate reagent is set in place. An electrolyte concentration analyzer relevant to the invention calculates a first ratio between electromotive force of a sample with known concentrations of ions and electromotive force of a reagent obtained by using one discrete ion-selective electrode, calculates a second ratio between two values of electromotive force of the reagent obtained by two discrete ion-selective electrodes, and decides whether or not the reagent is normal using the first ratio and the second ratio (refer to Fig. 2).

## Description

### Technical Field

This invention relates to an electrolyte concentration analyzer.

### Background Art

An automatic analyzer is known as a device for analyzing biological samples such as blood and urine. An electrolyte concentration analyzer is installed on the automatic analyzer. The electrolyte concentration analyzer is configured to analyze electrolyte components such as sodium (Na), potassium (K), and chlorine (Cl) in a sample.

Many of these electrolyte concentration analyzers utilize a method known as the ion-selective electrode (ISE) method. The ISE method measures the electrolyte concentration in a sample by measuring the potential difference between an ion-selective electrode (ISE) and a referential electrode. The ion-selective electrode incorporates an ion-sensitive membrane that generates a potential difference in response to an ionic component.

This potential varies depending on the electrolyte concentration in the sample. The referential electrode is configured to be in contact with a solution called referential electrode solution in order to maintain the reference potential. For referential electrode solution, a high-concentration KCl solution is used, for example.

A flow cell-type device can also be formed as the ion-selective electrode and the referential electrode to achieve high throughput. In this flow cell-type device, a flow path for supplying the sample to be measured is provided inside a housing, and the sensitive membrane is positioned in contact with the flow path.

In clinical testing, methods for quantifying the electrolyte concentration contained in biological samples (blood, particularly serum or plasma, urine, etc.) include a non-dilution method and a dilution method. The non-dilution method measures biological samples directly as samples without dilution. The dilution method involves diluting a specified amount of biological sample with a specified amount of diluted solution, then measuring the diluted biological sample using methods such as the ISE method. Since the dilution method requires a smaller volume of sample solution, and the concentration of coexisting substances such as proteins and lipids in the solution to be measured is low, and the impact of contamination from these substances is minimal, it enables high stability in the ISE method.

In electrolyte concentration analyzers for biological testing, the measurement method combining the flow cell-based ISE method and the dilution method is currently the mainstream approach. A container called a dilution tank is used for diluting the sample. The diluted biological sample prepared in the dilution tank is delivered through piping to the flow cell-type ion-selective electrode for measurement.

Electrolyte concentration analyzers typically use multiple reagents. The reagents includes, for example, (a) a calibrator used for calibration, (b) a cleaning solution for cleaning ion-selective electrode, and (c) a maintenance reagent for adjusting electrodes, a flow path, and a sample dispensing mechanism.

Reagents are manually replenished at the designated positions on the device. However, this operation carries the risk of human error. In Patent Literature 1, the ratio of electromotive force in one electrolyte item between the prepared reagent and a liquid with known electrolyte concentration is compared with the reference range, as a method for confirming that the reagent has been properly prepared.

### Citation List

### Patent Literature

Patent Literature 1: EP2458389

### Summary of Invention

### Technical Problem

Human error during reagent preparation to the device may prevent proper maintenance such as cleaning, potentially leading to invalid data. Specifically, cases such as diluting reagents, topping up reagents, concentration due to prolonged storage on the device, and mixing different reagents by adding another liquid without washing the container can be considered. The method disclosed in Patent Literature 1 may not be able to detect such inappropriate reagent preparation.

The present invention was made in view of the above-mentioned issues and aims to detect such preparation of inappropriate reagents in an electrolyte concentration analyzer.

### Solution to Problem

The electrolyte concentration analyzer of the present invention calculates a first ratio between an electromotive force of a sample with known concentration and an electromotive force of a reagent when using one type of ion-selective electrode, calculates a second ratio between the electromotive forces of the reagent when using two types of ion-selective electrodes, and decides whether the reagent is normal when using the first ratio and the second ratio.

### Advantageous Effects of Invention

According to the electrolyte concentration analyzer of the present invention, it is possible to detect that an inappropriate reagent is set in place. Other problems, configuration, and advantages of the present invention will be apparent from following embodiments,

### Brief Description of Drawings

[FIG. 1] Fig. 1 is a schematic diagram depicting an outlined configuration of an electrolyte concentration analyzer 1000 relevant to a first embodiment.
[FIG. 2] Fig. 2 is a flowchart for detecting inappropriate reagent setting in a receptacle A 1031.
[FIG. 3] Fig. 3 is a flowchart for detecting inappropriate reagent setting in a receptacle B 1032.
[FIG. 4] Fig. 4 presents an example of decisions made using ratios associated with reagents and the foregoing flowcharts.
[FIG. 5] Fig. 5 is a flowchart for the electrolyte concentration analyzer 1000 relevant to a second embodiment to detect inappropriate reagent setting in the receptacle B 1032.
[FIG. 6] Fig. 6 presents an example of decisions made using ratios associated with reagents and the flowchart of Fig. 5.

### Description of Embodiments

### First Embodiment

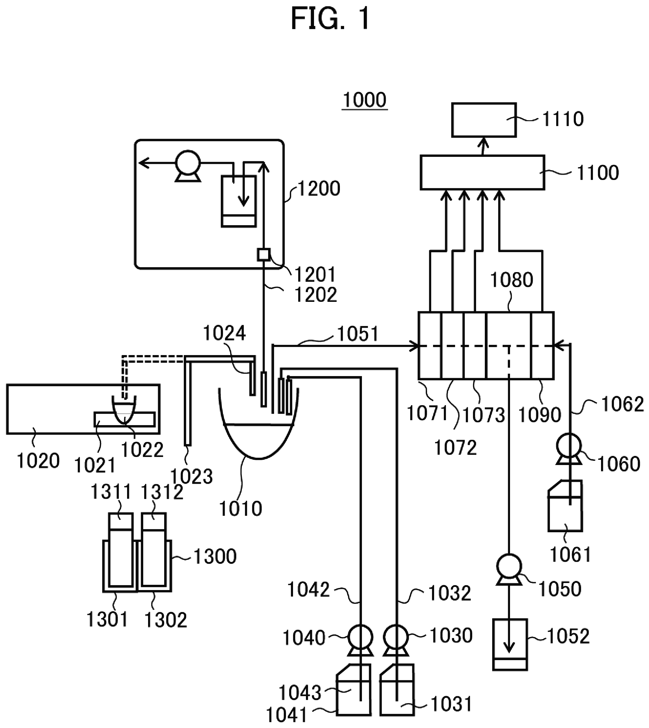

Fig. 1 is a schematic diagram depicting an outlined configuration of an electrolyte concentration analyzer 1000 relevant to a first embodiment of the present invention. The electrolyte concentration analyzer 1000 is an electrolyte concentration analyzer that a flow cell-type ion-selective electrode is installed.

A measurement control device 1100 (control device) functions as a measurement unit responsible for measurements in the electrolyte concentration analyzer 1000, and as a control unit responsible for various controls based on the measurement results. Furthermore, the measurement control device 1100 also functions as a display control unit that controls the display of measurement results and the like on a display unit 1110. The display unit 1110 performs display (measurement results, warnings, etc.) based on the received data.

A dilution tank 1010 is a container into which a diluted sample solution which is a mixture of a sample and a diluted solution, or an internal standard solution is supplied. The dilution tank 1010 is alternately supplied with the diluted sample solution and the internal standard solution, thereby alternately performing measurements of the diluted sample solution and the internal standard solution.

A sample feeder 1020 feeds a sample container 1022 mounted on a sample mounting pedestal 1021 to a sample dispensing mechanism 1023. The sample dispensing mechanism 1023 has a function of aspirating samples from the sample container 1022 and discharging them into the dilution tank 1010. A diluted solution dispensing mechanism 1030 is a device for dispensing the diluted solution from a diluted solution tank 1031 to the dilution tank 1010 via a diluted solution flow path 1032. An internal standard solution dispensing mechanism 1040 has a function of dispensing an internal standard solution 1043 from an internal standard solution tank 1041 into the dilution tank 1010 via an internal standard solution flow path 1042.

A liquid delivery mechanism 1050 performs a pumping operation to aspirate the diluted sample solution or the internal standard solution from the dilution tank 1010 toward ion-selective electrodes 1071 to 1073, while also aspirating an ion solution or a referential electrode solution from a liquid junction 1080 and discarding it into a waste liquid reservoir 1052. A referential electrode solution delivery mechanism 1060 is configured to aspirate the referential electrode solution from a referential electrode solution tank 1061 and deliver it to a referential electrode 1090 via a referential electrode solution flow path 1062.

A Cl ion-selective electrode 1071, a K ion-selective electrode 1072, and a Na ion-selective electrode 1073 are supplied with the diluted sample solution or the internal standard solution from the dilution tank 1010. Meanwhile, the referential electrode 1090 is supplied with the referential electrode solution from the referential electrode solution delivery mechanism 1060. The liquid junction 1080, which serves as a passageway for the diluted sample solution and the reagent in the flow cell-based system, is provided between the Cl ion-selective electrode 1071, the K ion-selective electrode 1072, or the Na ion-selective electrode 1073 and the referential electrode 1090.

A waste liquid mechanism 1200 has a function of opening the solenoid valve 1201 to discharge waste liquid through a waste liquid flow path 1202 when discarding of liquid in the dilution tank 1010.

A reagent holder 1300 has a receptacle A 1301 and a receptacle B 1302. A reagent container A 1311 is set in the receptacle A 1301. The reagent container A 1311 is intended to put a reagent A. A reagent container B 1312 is set in the receptacle B 1302. The reagent container B 1312 is intended to put a reagent B.

As an alternative method for supplying the reagents, the reagent may also be mounted from the sample feeder 1020 onto the sample mounting pedestal 1021 and transported to the sample dispensing mechanism 1023. In this case, the sample mounting pedestal 1021 serves as a receptacle for setting the reagent.

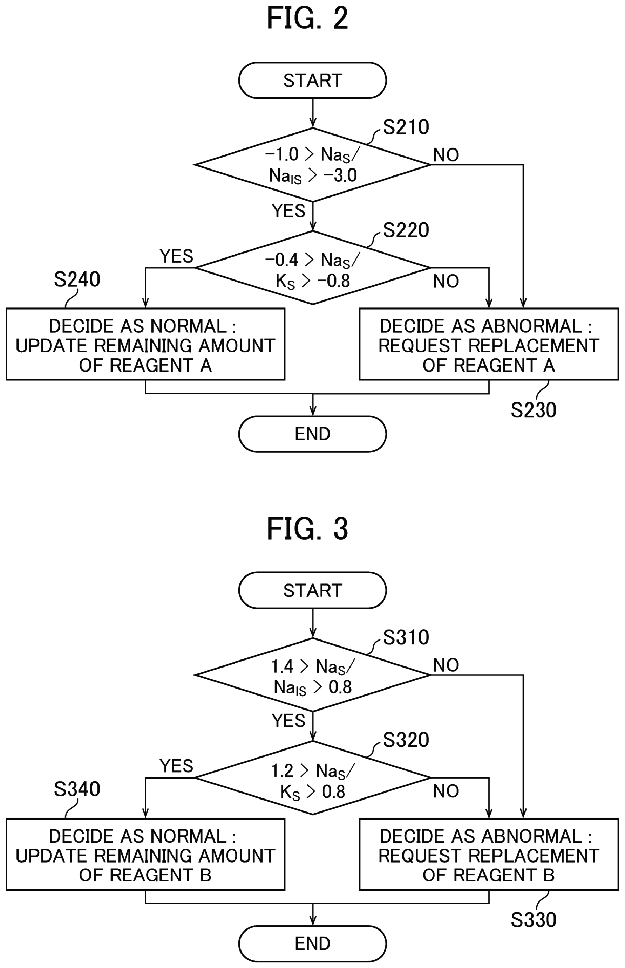

Fig. 2 is a flowchart for detecting inappropriate setting of reagents for the receptacle A 1301. The following describes each step in Fig. 2.

### (FIG. 2: Step S210: Part 1)

The sample dispensing mechanism 1023 collects reagent from the reagent container A 1311 set in receptacle A 1301 and discharges the reagent into the dilution tank 1010. An electromotive force is measured by the flow cell-type ion-selective electrodes 1071 to 1073 through a measurement target solution aspiration nozzle 1051. The measurement control device 1100 measures the electromotive force Na_{S} and Na_{IS} for one electrolyte item of the reagents (e.g., Na) in the reagent container A 1311 and for the same electrolyte item as a sample with known electrolyte concentration, respectively, then calculates the ratio (Ratio 1) using Equation 1: $Ratio 1 = {Na}_{S} / {Na}_{IS}$ Equation 1

### (FIG. 2: Step S210: Part 2, S230)

The measurement control device 1100 compares Ratio 1 with the reference range for the reagent (reagent A) to be set in the receptacle A 1301. If the result is outside the reference range (S210: NO), it is decided as abnormal and a message requesting replacement of the reagent A (S230) is output. If within the reference range, proceed to S220.

### (FIG. 2: Step S210: Supplementary)

A sample with known electrolyte concentration is, for example, the internal standard solution 1043. The internal standard solution dispensing mechanism 1040 supplies the internal standard solution 1043 to the dilution tank 1010, where the electromotive force thereof (Na_{IS}) is measured by the flow cell-type ion-selective electrodes 1071 to 1073. The reference range is pre-stored in the measurement control device 1100, or, as the reference range, an electrolyte concentration calculated from an electromotive force measured beforehand with an appropriate reagent A is used. In the latter case, the reference range is set to a value that can be decided by the electrolyte concentration.

### (FIG. 2: Step S220: Part 1)

The measurement control device 1100 measures the electromotive force of any two electrolyte items in the reagent container A 1311 and calculates the ratio (Ratio 2) using Equation 2. Here, for example, the ratio of two parameters: Na and K is calculated: $Ratio 2 = {Na}_{S} / {K}_{S}$ Equation 2

### (FIG. 2: Steps S220: Part 2 to S240)

The measurement control device 1100 compares Ratio 2 with the reference range for the reagent (reagent A) to be set in the receptacle A 1301. If the result falls outside the reference range (S220: NO), it is decided as abnormal and a message requesting replacement of the reagent A is output (S230). If within the reference range (S220: YES), decide as normal and update the remaining amount of the reagent A (S240).

### (FIG. 2: Step S240: Supplementary)

The remaining amount of reagent can be confirmed, for example, by a liquid level detection function of the sample dispensing mechanism. The liquid level detection function detects a liquid surface by capturing electrical characteristics such as capacitance or resistance values that change when a sample dispensing probe 1024 at the tip of the sample dispensing mechanism 1023 contacts or approaches the liquid surface.

Fig. 3 is a flowchart for detecting inappropriate setting of reagents for the receptacle B 1302. For the reagent in the receptacle B 1302, reagent-specific reference ranges for Ratio 1 and Ratio 2 are also established, and the same processing as in Fig. 2 is performed.

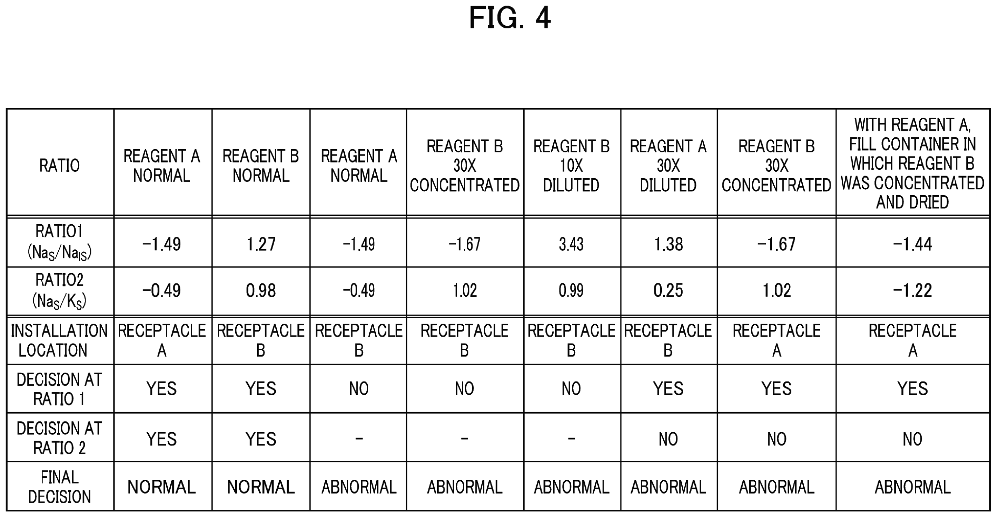

Fig. 4 shows an example of decision using the ratio of reagent and the above flowchart. Cases where decision is normal will be described. When a normal reagent A is set in the receptacle A 1301, both Ratio 1 and Ratio 2 fall within the reference range in the flowchart of Fig. 2, and the result is decided as normal. When a normal reagent B is set in the receptacle B 1302, both Ratio 1 and Ratio 2 fall within the reference range in the flowchart of Fig. 3, and the result is decided as normal.

Cases where decision in Ratio 1 is abnormal will be described. When a normal reagent A is set in the receptacle B 1302, Ratio 1 in the flowchart of Fig. 3 falls outside the reference range and is decided as abnormal. When a 30-fold concentrate of the reagent B is set in the receptacle B 1302, Ratio 1 in the flowchart of Fig. 3 falls outside the reference range and is decided as abnormal. When a 10-fold dilution of the reagent B is set in the receptacle B 1302, Ratio 1 in the flowchart of Fig. 3 falls outside the reference range and is decided as abnormal.

Cases where decision in Ratio 1 is normal and decision in Ratio 2 is abnormal will be described. When the reagent A is diluted 30-fold and set in the receptacle B 1302, in the flowchart of Fig. 3, Ratio 1 falls within the reference range, but Ratio 2 falls outside the reference range, then the result is decided as abnormal. When a 30-fold concentrate of the reagent B is set in the receptacle A 1301, Ratio 1 in the flowchart of Fig. 2 falls within the reference range, but Ratio 2 falls outside the reference range, then the result is decided as abnormal. When the reagent A is filled into a container containing the concentrated and dried reagent B and set in the receptacle A 1301, Ratio 1 in the flowchart of Fig. 2 falls within the reference range, but Ratio 2 falls outside the reference range, then the result is decided as abnormal.

In the third example from the right in Fig. 4, since the reagent A was set in the receptacle B 1302, it should have been recognized as an incorrect reagent at the time when Ratio 1 was decided. However, in this example, diluting the reagent A 30-fold and setting it in the receptacle B 1302 triggers the corresponding decision process for the receptacle B 1302 (as shown in the flowchart of Fig. 3), which then will be decided based on the numerical range of the reagent B. Accordingly, Ratio 1 happened to fall within the normal range. As a result, Ratio 1 was incorrectly decided as normal, but Ratio 2 was abnormal, then it was ultimately detected that a wrong reagent had been set. In the second example from the right in Fig. 4, the reagent A (dilution) and the reagent B (concentration) are swapped compared to the third case from the right, but the underlying concept remains the same. The measurement control device 1100 may output a result of decision indicating that a checking in Ratio 1 was accidentally passed.

In the first example from the right in Fig. 4, the reagent A and the reagent B are mixed within the container. However, most of the electromotive force of Na was contributed by the reagent A, while the reagent B had only a slight effect on the electromotive force of Na. As a result, Ratio 1 was incorrectly decided as normal, but Ratio 2 was abnormal, then it was ultimately detected that a wrong reagent had been set.

Thus, in the decision in Ratio 1, cases of incorrect setting position of normal reagent, concentration, and dilution can be detected. In the decision in Ratio 2, cases such as topping up reagents into inappropriate containers, setting concentrated or diluted reagents in wrong receptacles, or mixing different reagents. By using both Ratio 1 and Ratio 2, it is possible to detect inappropriate settings in all cases. The measurement control device 1100 may output messages indicating potential causes of such abnormalities in addition to the decision result of whether the reagent is normal.

### Second Embodiment

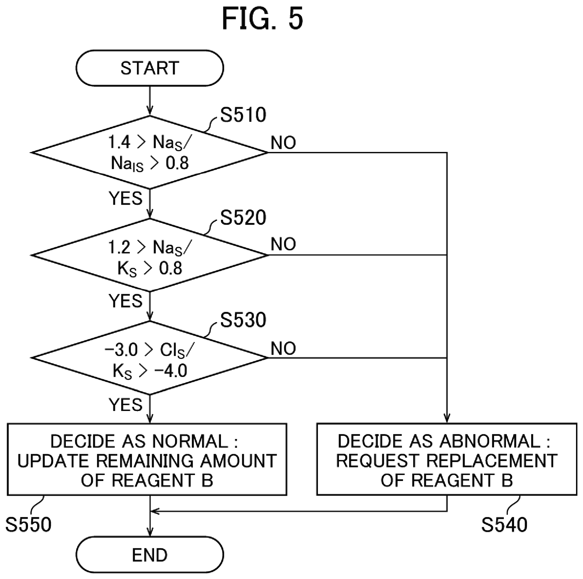

Fig. 5 is a flowchart for the electrolyte concentration analyzer 1000 according to a second embodiment of the present invention to detect that a reagent has been inappropriately set with respect to the receptacle B 1302. The configuration of the electrolyte concentration analyzer 1000 is the same as in the first embodiment. S510 to S520 are the same as S310 to S320 in Fig. 3. However, if the condition is satisfied at S520, then S530 is also performed.

### (FIG. 5: Step S530: Part 1)

The measurement control device 1100 measures the electromotive forces of any two electrolyte items in the reagent container B 1312 and calculates the ratio (Ratio 3) using Equation 3. The electrolyte items in this step differ from those in S520. Since the ratio of two items of Na and K was calculated in S520, the ratio of Cl and K will be calculated in this step: $Ratio 3 = {Cl}_{S} / {K}_{S}$ Equation 3

### (FIG. 5: Step S530: Part 2)

The measurement control device 1100 compares Ratio 3 with the reference range for the reagent (reagent B) to be set in the receptacle B 1302. If the result falls outside the reference range (S530: NO), it is decided as abnormal and a message requesting replacement of the reagent B is output (S540). If within the reference range (S530: YES), decide as normal and update the remaining amount of the reagent B (S550).

### (FIG. 5: Supplementary)

When calculating Ratio 3, the electrolyte concentration calculated from the electromotive force may be used. In this case, set the reference range for this step to a value that can be decided on the basis of the electrolyte concentration. For reagents in receptacles other than the receptacle B 1302, normal decision can similarly be performed using the reagent-specific Ratios 1 to 3. In addition to Ratio 3, Ratio 4 may also be calculated, and a normal decision may be performed on this basis. Ratio 4 is calculated for two electrolyte items different from those in Ratios 1 to 3. The measurement control device 1100 may set electrodes for calculating Ratio 2 and Ratio 3 for each type of reagent in each receptacle. Additionally, for each type of reagent in each receptacle, it may be choosen whether or not to use Ratio 3.

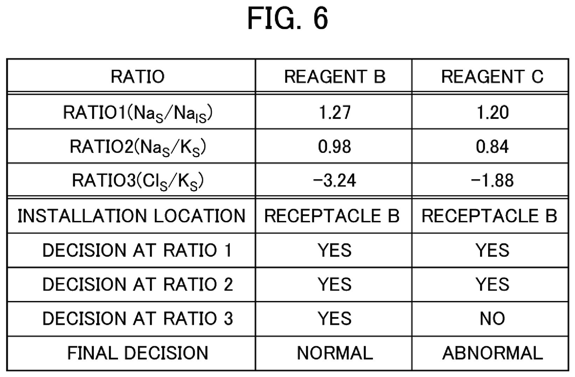

Fig. 6 shows an example of decision using the ratios of the reagents and the above flowchart. Cases where decision is normal will be described. When a normal reagent B is set in the receptacle B 1302, all Ratios 1, 2, and 3 in the flowchart of Fig. 5 fall within the reference range and are decided to be normal.

Cases where decision is abnormal will be described. When a normal reagent C is set in the receptacle B 1302, in the flowchart of Fig. 5, Ratio 1 and Ratio 2 are within the reference range, but Ratio 3 is outside the reference range, then it is decided as abnormal. If the reagent C is set in the receptacle B 1302 and decided using the flowchart of Fig. 3 in the first embodiment, both Ratio 1 and Ratio 2 fall within the reference range, then it is decided as normal, and a set failure cannot be detected.

Specifically, by setting the reagent C in the receptacle B 1302, the corresponding decision criteria for receptacle B 1302 (flowchart of Fig. 5) is implemented, and the normal ranges for Ratio 1 and Ratio 2 within the decision criteria coincides by chance with the respective ratios of the reagent C. As a result, Ratios 1 and 2 were incorrectly decided as normal, but Ratio 3 was abnormal, then it was ultimately detected that a wrong reagent had been set. The measurement control device 1100 may output a decision result indicating that it accidentally passed the checks for Ratio 1 and Ratio 2.

The reasons why the reagent C is abnormal could be any of the following: the wrong reagent was set in the receptacle B 1302; the concentration of the reagent set in the receptacle B 1302 is incorrect; the wrong reagent was set in the wrong receptacle; and the correct reagent and the wrong reagent are mixed. The measurement control device 1100 may output messages indicating potential causes of such abnormalities in addition to the decision result of whether the reagent is normal.

Thus, in the third embodiment, by adding the decision of Ratio 3 to Ratios 1 and 2, it is possible to detect an inappropriate setting of reagent more accurately than in the first embodiment.

### Regarding Modified Examples of Present Invention

In the above embodiments, an example is described where the electromotive force of Na and the electromotive force of K are used to calculate Ratio 2. This is because as cleaning solutions, reagents rich in Na and Cl, such as sodium hypochlorite are often used, and employing the ratio of Na to K, which exhibit large concentration differences or electromotive force differences, better demonstrates the characteristics of reagent to be tested.

In the above embodiments, it is described that S210 is performed using the Na ion-selective electrode 1073, and S220 is performed using both the Na ion-selective electrode 1073 and the K ion-selective electrode 1072. Between S210 and S220, it is not necessary to use a common ion-selective electrode; it is sufficient to use two different ion-selective electrodes in S220. For example, a Cl ion-selective electrode 1071 and a K ion-selective electrode 1072 may be used. The same applies between S310 and S320, and the same applies between S510 and S520.

In the above embodiments, it is described that S520 is performed using the Na ion-selective electrode 1073 and the K ion-selective electrode 1072, and S530 is performed using the Cl ion-selective electrode 1071 and the K ion-selective electrode 1072. The combination of ion-selective electrodes in S520 to S530 is not limited to this specific combination, it is enough that the combination of ion-selective electrodes used to calculate Ratio 2 and the combination of ion-selective electrodes used to calculate Ratio 3 are different from each other.

In the above embodiments, the numerator and denominator used to calculate Ratios 1 to 3 are not limited to those described above, the numerator and denominator may be reversed. For example, the following may be right: $Ratio 1 = {Na}_{IS} / {Na}_{S} ; and Ratio 2 = {K}_{S} / {Na}_{S} .$

In the above embodiments, the Na_{S} value in S210 and the Na_{S} value in S220 may be reused between steps or may be measured anew for each step. The same applies when using ion-selective electrodes common to other steps.

In the above embodiments, the measurement control device 1100 may be configured by hardware such as circuit devices implementing its functions, or it may be configured by cause an arithmetic device such as a CPU (Central Processing Unit) to execute software which implements its functions.

In the above embodiments, the receptacle A 1301, the receptacle B 1302, and the sample mounting pedestal 1021 each serve as a mounting element in which a reagent container containing a reagent is put. When a reagent container is put on the sample mounting pedestal 1021, the sample mounting pedestal 1021 may also be divided into receptacles for each reagent type, similar to the reagent holder 1300. Therefore, a possibility of setting reagent containers in the wrong receptacle also exists in the sample mounting pedestal 1021. The procedure for detecting setting failures for the receptacle A 1301 and the receptacle B 1302 in the above embodiments can be applied to setting failures for similar receptacles provided by the sample mounting pedestal 1021.

### List of Reference Signs

1000: electrolyte concentration analyzer
1010: dilution tank
1020: sample feeder
1021: sample mounting pedestal
1022: sample container
1023: sample dispensing mechanism
1024: sample dispensing probe
1030: diluted solution dispensing mechanism
1031: diluted solution tank
1032: diluted solution flow path
1040: internal standard solution dispensing mechanism
1041: internal standard solution tank
1042: internal standard solution flow path
1043: internal standard solution
1050: liquid delivery mechanism
1051: measurement target solution aspiration nozzle
1052: waste liquid reservoir
1060: referential electrode solution delivery mechanism
1061: referential electrode solution tank
1062: referential electrode solution flow path
1071: Cl ion-selective electrode
1072: K ion-selective electrode
1073: Na ion-selective electrode
1080: liquid junction
1090: referential electrode
1100: measurement control device
1110: display unit
1200: waste liquid mechanism
1201: solenoid valve
1202: waste liquid flow path
1300: reagent holder
1301: receptacle A
1302: receptacle B
1311: reagent container A
1312: reagent container B

## Claims

1. An electrolyte concentration analyzer which measures concentrations of ions contained in a sample through use of ion-selective electrodes, the electrolyte concentration analyzer comprising:
two or more discrete ion-selective electrodes including a first ion-selective electrode which selectively reacts with a first ion and a second ion-selective electrode which selectively reacts with a second ion; and
a control device which measures concentrations of ions in the sample through use of electromotive force obtained with the ion-selective electrodes, wherein
the control device acquires a first electromotive force of a sample with known concentrations of ions and a second electromotive force of a reagent, respectively, measured by using any one of the two or more discrete ion-selective electrodes;
the control device calculates a first ratio between the first electromotive force and the second electromotive force;
the control device acquires a third electromotive force of the reagent and a fourth electromotive force of the reagent measured, respectively, by using any two of the two or more discrete ion-selective electrodes;
the control device calculates a second ratio between the third electromotive force and the fourth electromotive force; and
the control device decides whether or not the reagent is normal using the first ratio and the second ratio.

2. The electrolyte concentration analyzer according to claim 1, wherein
if the first ratio is outside a first range, the control device decides that the reagent is abnormal.

3. The electrolyte concentration analyzer according to claim 2, wherein
if the first ratio is within the first range, the control device then calculates the second ratio;
if the second ratio is within a second range, the control device decides that the reagent is normal and, if the second ratio is outside the second range, decides that the reagent is abnormal.

4. The electrolyte concentration analyzer according to claim 2, further comprising a mounting element in which a reagent container containing a reagent is put, wherein
if the first ratio is outside the first range,
the control device outputs a result of decision that the reagent is abnormal for any of the following reasons:
an incorrect reagent is put in the mounting element; and
the reagent concentration is incorrect.

5. The electrolyte concentration analyzer according to claim 3, further comprising a mounting element in which a reagent container containing a reagent is put, wherein
if the second ratio is outside the second range, the control device outputs a result of decision that the reagent is abnormal for any of the following reasons:
the reagent container is refilled with an incorrect reagent;
while the concentration of one of the components of the reagent measured by one of the ion-selective electrodes for use to calculate the first ratio is correct, the reagent is wrong distinguished; and
a correct reagent and an incorrect reagent are mixed.

6. The electrolyte concentration analyzer according to claim 3, further comprising mounting elements, in each of which a reagent container containing a reagent is put, for each of discrete reagents, wherein
the control device sets the first range for each of the discrete reagents or each of the mounting elements; and
if the first ratio is within the first range, whereas the second ratio is outside the second range, the control device outputs a result of decision that a wrong decision was made that the first ratio is correct for the following reason, while the reagent was put in an incorrect mounting element, the first range set for the incorrect mounting element is set to result in regarding the reagent as normal.

7. The electrolyte concentration analyzer according to claim 1, wherein
a set of the two or more discrete ion-selective electrodes further includes a third ion-selective electrode which selectively reacts with a third ion;
the control device measures a fifth electromotive force of the reagent by using the third ion-selective electrode;
the control device calculates a third ratio between the third electromotive force and the fifth electromotive force or between the fourth electromotive force and the fifth electromotive force; and
the control device decides whether or not the reagent is normal using the first ratio, the second ratio, and the third ratio.

8. The electrolyte concentration analyzer according to claim 7, wherein
if the first ratio is within the first range, the control device then calculates the second ratio;
if the second ratio is within the second range, the control device then calculates the third ratio;
if the third ratio is outside a third range, the control device decides that the reagent is abnormal and, if the third ratio is within the third range, decides that the reagent is normal.

9. The electrolyte concentration analyzer according to claim 8, further comprising a mounting element in which a reagent container containing the reagent is put, wherein
if the third ratio is outside the third range, the control device outputs a result of decision that the reagent is abnormal for any of the following reasons:
the incorrect reagent is put in the mounting element;
the reagent concentration is incorrect;
the incorrect reagent whose concentration is incorrect is put in the mounting element; and
a correct reagent and an incorrect reagent are mixed.

10. The electrolyte concentration analyzer according to claim 1, wherein
any one of the two or more discrete ion-selective electrodes is a sodium ion-selective electrode which selectively reacts with sodium ion; and
any one of the two or more discrete ion-selective electrodes is a potassium ion-selective electrode which selectively reacts with potassium ion.

11. The electrolyte concentration analyzer according to claim 10, wherein
when the reagent is a cleaning liquid, the control device
measures the first electromotive force and the second electromotive force by using the sodium ion-selective electrode,
measures the third electromotive force by using the sodium ion-selective electrode, and measures the fourth electromotive force by using the potassium ion-selective electrode.

12. An electrolyte concentration analysis method by which to measure concentrations of ions contained in a sample through use of ion-selective electrodes, comprising the steps of:
acquiring a first electromotive force of a sample with known concentrations of ions and a second electromotive force of a reagent, respectively, measured by using any one of two or more discrete ion-selective electrodes including a first ion-selective electrode which selectively reacts with a first ion and a second ion-selective electrode which selectively reacts with a second ion;
calculating a first ratio between the first electromotive force and the second electromotive force;
acquiring a third electromotive force of the reagent and a fourth electromotive force of the reagent measured, respectively, by using any two of the two or more discrete ion-selective electrodes;
calculating a second ratio between the third electromotive force and the fourth electromotive force; and
deciding whether or not the reagent is normal using the first ratio and the second ratio.
